# EUROPEAN PATENT SPECIFICATION

(11) **EP 2 339 149 B1**
(45) Date of publication and mention of the grant of the patent: **22.01.2014**
(21) Application number: 10195904.7
(22) Date of filing: 20.12.2010
(51) Int. Cl.: F02D 11/10, B62K 11/00, F02D 9/10

(54) **Saddle-ride-type vehicle**
Sattelfahrzeug
Véhicule à monture de selle

(30) Priority: 24.12.2009 JP 2009293352
(43) Date of publication of application: 29.06.2011
(73) Proprietor: Honda Motor Co., Ltd., Tokyo 107-8556 (JP)
(72) Inventor: Asai, Kohei, Saitama 351-0193 (JP)
(74) Representative: Quinterno, Giuseppe

(56) References cited:
- EP-A2- 1 510 450
- JP-A- 2002 256 896
- US-A1- 2007 119 419

## Description

The present invention relates to a saddle-ride-type vehicle, and more particularly to a saddle-ride-type vehicle which includes a throttle valve drive motor for driving a throttle valve.

Conventionally, there has been proposed a saddle-ride-type vehicle which includes an internal combustion engine, an intake passage which supplies intake air to the internal combustion engine, a throttle valve which can change a quantity of intake air circulating through the intake passage, and a throttle valve drive motor which drives the throttle valve.

For example, in JP-A-2002-256896 there is disclosed a motorcycle as a saddle-ride-type vehicle, wherein the motorcycle is configured such that an intake passage extends in the direction away from an internal combustion engine, and a throttle valve drive motor is arranged below, above, in front of or behind the intake passage. To be more specific, in the motorcycle proposed in the above-mentioned document, when the intake passage is constituted such that the intake passage extends rearward from a rear surface of the internal combustion engine, the throttle valve drive motor is arranged below or above the intake passage. Further, when the intake passage is constituted such that the intake passage extends upward from an upper surface of the internal combustion engine, the throttle valve drive motor is arranged in front of or behind the intake passage. By arranging the throttle valve drive motor in this manner, it is possible to prevent the structure of the internal combustion engine in the vicinity of the intake passage from becoming large-sized.

However, when the throttle valve drive motor is arranged as disclosed in patent document 1 in a state where the intake passage extends along an outer surface of the internal combustion engine, the throttle valve drive motor largely projects from the outer surface of the internal combustion engine. For example, when the throttle valve drive motor is arranged above the intake passage in the state where the intake passage extends along an upper surface of the internal combustion engine, the throttle valve drive motor largely projects from the upper surface of the internal combustion engine thus making the structure of the internal combustion engine in the vicinity of the intake passage becomes large-sized.

The closest known prior art is shown in document EP 1510450.

Accordingly, it is an object of the present invention to provide a saddle-ride-type vehicle which can arrange a throttle valve drive motor without making the structure of an internal combustion engine in the vicinity of an intake passage large-sized in a state where the intake passage is arranged to extend along an outer surface of the internal combustion engine.

The invention called for in claim 1 is directed to a saddle-ride-type vehicle which includes: a vehicle body frame; an internal combustion engine which includes a cylinder head provided with an intake port, a cylinder connected to the cylinder head and a crankcase which includes a crankshaft and is connected to the cylinder, and is connected to the vehicle body frame; an air cleaner which purifies intake air; an intake passage which connects the air cleaner and the intake port so as to form a passage between the air cleaner and the internal combustion engine; a throttle body which constitutes a portion of the intake passage and is provided with a throttle valve which has a predetermined opening/closing shaft and is operable to change a quantity of intake air which circulates through the intake passage; and a throttle valve drive motor which drives the throttle valve, wherein the intake passage extends toward a crankcase side from the intake port, and at least a portion of the intake passage is arranged along an outer surface of the internal combustion engine, and the throttle valve drive motor is arranged on a portion of the intake passage along the outer surface of the internal combustion engine in an overlapping manner with the intake passage as viewed from a side of a vehicle.

The invention called for in claim 2 is, in addition to the constitution described in claim 1, characterized in that the opening/closing shaft of the throttle valve is arranged in the widthwise direction of the vehicle, and a rotary shaft of the throttle valve drive motor is arranged orthogonal to the opening/closing shaft.

The invention called for in claim 3 is, in addition to the constitution described in claim 2, characterized in that the internal combustion engine is swingably connected to the vehicle body frame, and the throttle valve drive motor is arranged in front of a connecting portion between the vehicle body frame and the internal combustion engine.

The invention called for in claim 4 is, in addition to the constitution described in any one of claims 1 to 3, characterized in that the internal combustion engine further includes a cam chain chamber arranged on one side of the inside of the internal combustion engine in the widthwise direction of the vehicle, and the throttle valve drive motor is arranged on the other side of the internal combustion engine in the widthwise direction of the vehicle.

The invention called for in claim 5 is, in addition to the constitution described in any one of claims 1 to 3, characterized in that the internal combustion engine further includes a cooling water inlet/outlet which is formed on one side of the internal combustion engine in the widthwise direction of the vehicle and allows the flow-in/flow-out of cooling water for cooling the internal combustion engine, and the throttle valve drive motor is arranged on the other side of the internal combustion engine in the widthwise direction of the vehicle.

The invention called for in claim 6 is, in addition to the constitution described in claim 1, characterized in that the cylinder is arranged such that an axis of the cylinder becomes approximately horizontal, the internal combustion engine further includes a starter motor which is arranged on an upper surface of the crankcase, the throttle body is arranged on an upper surface of the internal combustion engine in front of the crankcase, and the throttle valve drive motor is arranged between the starter motor and the throttle body in an overlapping manner with the intake passage as viewed in a side view of the vehicle.

The invention called for in claim 7 is, in addition to the constitution described in claim 1, characterized in that the air cleaner is arranged in an offset manner toward one side in the widthwise direction of the vehicle with respect to the intake port as viewed in a plan view, the intake passage has a bent portion which is formed on an upper surface of the internal combustion engine, the throttle body is arranged on the bent portion, and the throttle valve drive motor is arranged in a region which is surrounded by the bent portion as viewed in a plan view.

According to the invention called for in claim 1, the throttle valve drive motor is arranged on the portion of the intake passage along the outer surface of the internal combustion engine in an overlapping manner with the intake passage as viewed from a side of the vehicle. Due to such a constitution, the throttle valve drive motor does not largely project from the outer surface of the internal combustion engine. Accordingly, it is possible to prevent the structure of the internal combustion engine in the vicinity of the intake passage when the throttle valve drive motor is arranged from becoming large-sized and hence, the structure of the internal combustion engine in the vicinity of the intake passage can be formed into a compact shape.

According to the invention called for in claim 2, the opening/closing shaft of the throttle valve is arranged along the widthwise direction of the vehicle, and the rotary shaft of the throttle valve drive motor is arranged orthogonal to the opening/closing shaft of the throttle valve. Due to such a constitution, the axial direction of the throttle valve drive motor can be arranged along the longitudinal direction of the vehicle. Accordingly, the throttle valve drive motor does not largely project in the widthwise direction of the vehicle and hence, the structure of the internal combustion engine in the vicinity of the intake passage can be formed into a compact shape.

According to the invention called for in claim 3, the throttle valve drive motor is arranged in front of a connecting portion between the vehicle body frame and the internal combustion engine. Due to such a constitution, when the throttle valve drive motor is arranged, the throttle valve drive motor does not interfere with the connecting portion between the vehicle body frame and the internal combustion engine. Accordingly, the structure in the vicinity of the connecting portion can be formed into a compact shape.

According to the invention called for in claim 4, the cam chain chamber is arranged on one side of the inside of the internal combustion engine in the widthwise direction of the vehicle, and the throttle valve drive motor is arranged on the other side of the internal combustion engine in the widthwise direction of the vehicle. Due to such a constitution, the throttle valve drive motor can be arranged on a side opposite to a side where the cam chain chamber which projects from an upper surface of the internal combustion engine in the shape of the internal combustion engine is provided and hence, the structure in the vicinity of the internal combustion engine can be formed into a compact shape.

According to the invention called for in claim 5, the cooling water inlet/outlet is arranged on one side of the internal combustion engine in the widthwise direction of the vehicle, and the throttle valve drive motor is arranged on the other side of the internal combustion engine in the widthwise direction of the vehicle. Due to such a constitution, in the internal combustion engine, it is possible to arrange the throttle valve drive motor on the side opposite to the side where the cooling water inlet/outlet to which the cooling water pipe is connected is arranged. Accordingly, it is possible to arrange the throttle valve drive motor while preventing the throttle valve drive motor from interfering with the cooling water inlet/outlet and the cooling water pipe and hence, the structure in the vicinity of the internal combustion engine can be formed into a compact shape.

The starter motor requires a relatively large torque and hence, the starter motor is formed into a relatively large shape compared to the throttle valve drive motor. In view of the above, according to the invention called for in claim 6, the starter motor is arranged on an upper surface of the crankcase, the throttle body is arranged on the upper surface of the internal combustion engine in front of the crankcase, and the throttle valve drive motor is arranged between the starter motor and the throttle body. Due to such a constitution, the throttle valve drive motor can be arranged in a space defined between the starter motor which is mounted on the upper surface of the internal combustion engine in a projecting manner and the throttle body. Accordingly, the structure of the upper surface of the internal combustion engine when the throttle valve drive motor is arranged can be formed into a compact shape.

According to the invention called for in claim 7, the intake passage has the bent portion which is formed on the upper surface of the internal combustion engine, the throttle body is arranged on the bent portion, and the throttle valve drive motor is arranged in a region which is surrounded by the bent portion as viewed in a plan view. Due to such a constitution, the throttle valve drive motor can be arranged in a recessed side of the bent portion which is the region surrounded by the intake passage and hence, it is possible to ensure the degree of freedom in the arrangement of other members (accessories) arranged on the upper surface of the internal combustion engine. Accordingly, the throttle valve drive motor and other accessories can be efficiently arranged on the upper surface of the internal combustion engine and hence, the structure of the upper surface of the internal combustion engine can be formed into a compact shape.

Embodiments of the present invention are explained hereinafter with reference to the drawings wherein:
Fig. 1 is a left side view showing a scooter-type motorcycle which constitutes a saddle-ride type vehicle according to a first embodiment of the present invention;
Fig. 2 is a left side view showing the constitution of a portion of the motorcycle around an engine according to the first embodiment;
Fig. 3 is a plan view showing the constitution of the portion of the motorcycle around the engine according to the first embodiment;
Fig. 4 is a view schematically showing the constitution of a throttle body and a throttle valve drive motor;
Fig. 5 is a plan view showing the constitution of a portion of a motorcycle around an engine according to a second embodiment of the present invention;
Fig. 6 is a plan view showing the constitution of a portion of a motorcycle around an engine according to a third embodiment of the present invention;
Fig. 7 is a left side view showing the constitution of the portion of the motorcycle around the engine according to the third embodiment; and
Fig. 8 is a plan view showing the constitution of a portion of a motorcycle around an engine according to a fourth embodiment of the present invention.

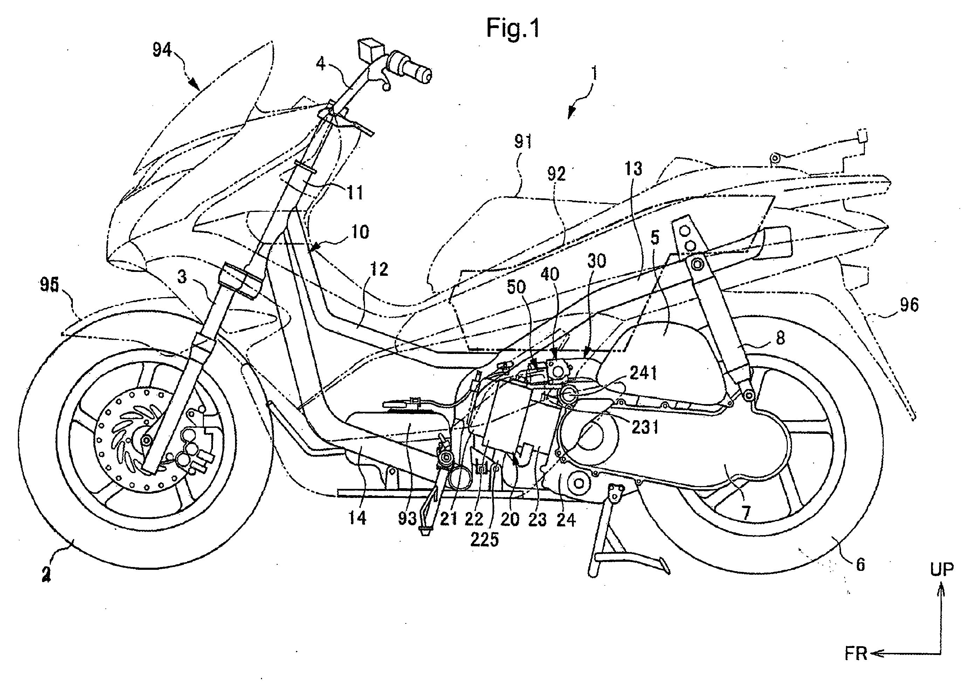

Firstly, in conjunction with Fig. 1 to Fig. 3, the overall constitution of a scooter-type motorcycle 1 which constitutes a saddle-ride type vehicle of a first embodiment is explained.

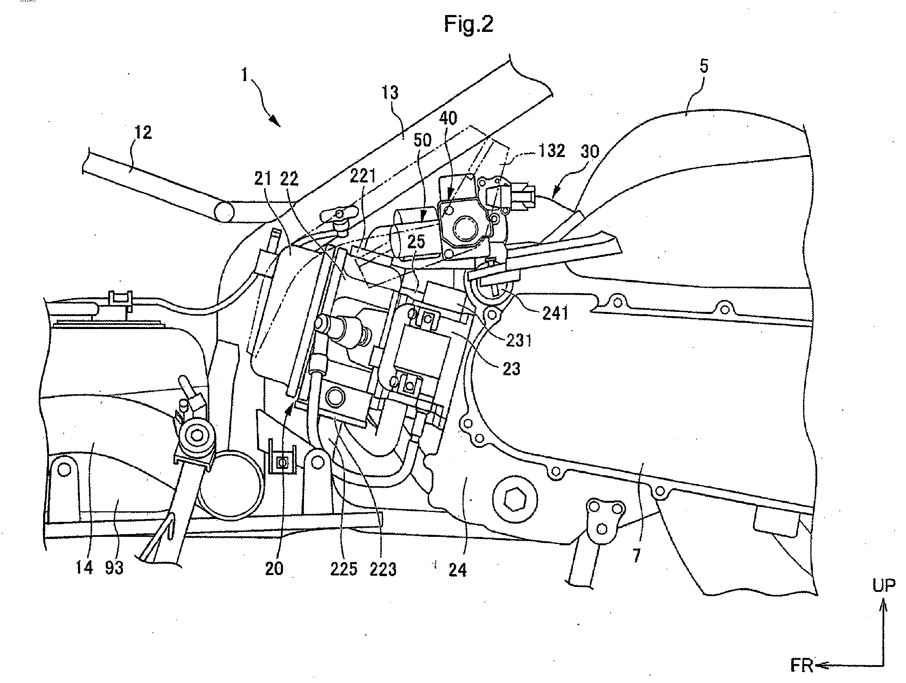

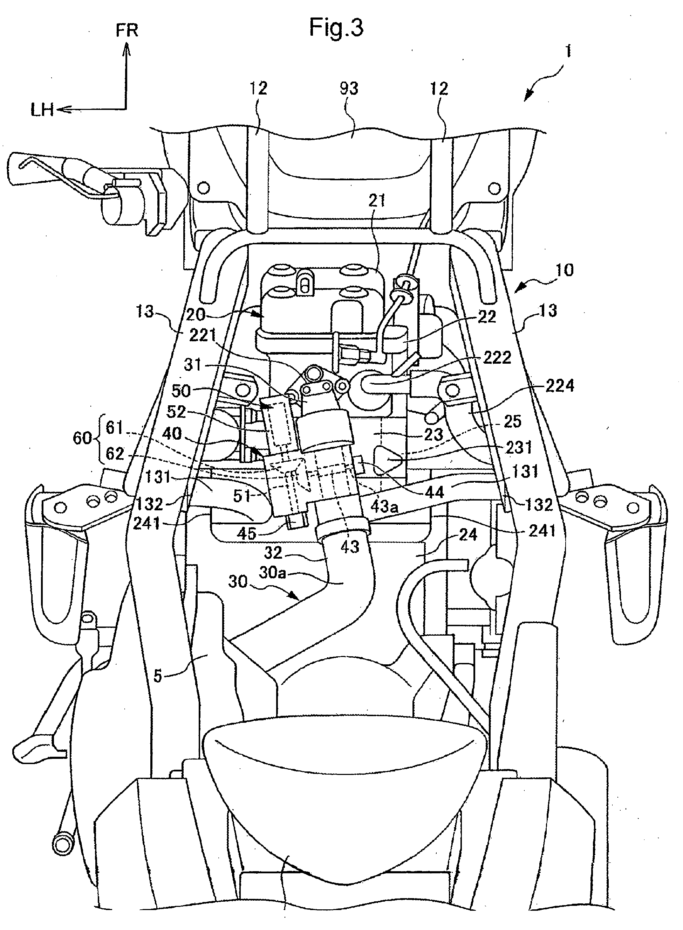

Fig. 1 is a left side view showing a scooter-type motorcycle which constitutes a saddle-ride type vehicle according to a first embodiment of the present invention. Fig. 2 is a left side view showing the constitution of the portion of the motorcycle around an engine according to the first embodiment, and Fig. 3 is a plan view of the motorcycle.

In the explanation made hereinafter, the description of directions "frontward", "rearward", "leftward", "rightward", "upward" and "downward", unless otherwise specified, follows the directions as viewed from a rider (driver) who rides on the motorcycle. Further, in the drawing, an arrow FR indicates a frontward direction of the vehicle, an arrow LH indicates a leftward direction of the vehicle, and an arrow UP indicates an upward direction of the vehicle.

As shown in Fig. 1, the motorcycle 1 of the first embodiment is mainly constituted of a vehicle body frame 10, a front wheel 2, a front fork 3 which pivotally supports the front wheel 2, a handle 4 which is connected to the front fork 3, an engine 20 which is swingably connected to the vehicle body frame 10 and constitutes an internal combustion engine, an air cleaner 5 which purifies intake air, an intake passage 30 which connects the air cleaner 5 and the engine 20, a rear wheel 6 which constitutes a drive wheel, a power transmission device 7 which is mounted on the engine 20 and pivotally supports the rear wheel 6, a rear cushion 8, a throttle body 40 which has a throttle valve 43 (see Fig. 3), a throttle valve drive motor 50 which drives the throttle valve 43, a seat 91 on which a rider rides, a storage box 92 which is arranged below the seat 91, a fuel tank 93, a body cover 94 which covers the vehicle body frame 10, a front fender 95 and a rear fender 96.

The vehicle body frame 10 is constituted by integrally joining plural kinds of steel members by welding or the like. As shown in Fig. 1, the vehicle body frame 10 includes a head pipe 11, main frames 12, seat rails 13, down frames 14, and a plurality of cross members (not shown in the drawing).

The head pipe 11 is arranged on a front end portion of the vehicle body frame 10.

The main frames 12 are arranged in pair in the lateral direction. The pair of main frames 12 has a front end side thereof connected to the head pipe 11. The pair of main frames 12 extends obliquely in the downward and rearward direction from the head pipe 11 as viewed in a side view. A rear end side of the pair of main frames 12 is connected to the seat rails 13.

The seat rails 13 are arranged in pair in the lateral direction. The pair of seat rails 13 has one end side thereof connected to the down frame 14. The pair of seat rails 13, as viewed in a side view, extends upward from a connecting portion thereof with the down frame 14, is bent halfway, and has the other end thereof extended obliquely in the upward and rearward direction. The main frames 12 are connected to a portion of the pair of seat rails 13 in the vicinity of the bent portions.

The down frames 14 are arranged below the main frames 12, and are arranged in pair in the lateral direction. The pair of down frames 14, as viewed in a side view, extends obliquely in the downward and rearward direction from the head pipe 11, is bent halfway, and extends in the rearward direction. A rear end side of the pair of down frames 14 is connected to the pair of seat rails 13.

The front forks 3 are arranged in pair in the lateral direction. The pair of front forks 3 is arranged approximately parallel to the head pipe 11 in front of the head pipe 11, and is supported on the head pipe 11. Upper end portions of the pair of front forks 3 are connected to a lower end portion of the handle 4. Lower end portions of the pair of front forks 3 rotatably and pivotally support the front wheel 2.

The cross members (not shown in the drawing) are constituted of pipe members which extend in the lateral direction, for example, and connect the lateral pairs of frames (main frames 12, seat rails 13, down frames 14 and the like) in the lateral direction.

The engine 20 is a prime mover of the motorcycle 1 and, as shown in Fig. 1, is mounted on an approximately center portion of the vehicle body in the longitudinal direction. The engine 20 is swingably connected to the vehicle body frame 10 (seat rails 13) by way of a pair of connecting members 131 (see Fig. 3) and a pair of support plates 132 (see Fig. 2).

A profile of the engine 20 is, as shown in Fig. 1 to Fig. 3, mainly formed by a cylinder head cover 21, a cylinder head 22, a cylinder 23 and a crankcase 24. The engine 20 is arranged such that the cylinder head cover 21 is positioned on a front side of the vehicle, and the crankcase 24 is positioned on a rear side of the vehicle. To be more specific, the engine 20 is arranged such that an axis of the cylinder 23 becomes approximately horizontal. Due to such an arrangement, an upper surface of the engine 20 also becomes approximately horizontal. Here, "approximately horizontal" is a concept which includes a horizontal state and a state where the engine 20 is inclined slightly (within ±20 degrees) from such a horizontal state.

In the inside of the engine 20, an intake valve, an exhaust valve, a cam shaft which is connected to the intake valve and the exhaust valve, a piston, a crankshaft, and a cam chain which is connected to the cam shaft as well as the crankshaft are housed (none of these parts shown in the drawing).

The cylinder head cover 21 and the cylinder head 22 house the intake valve, the exhaust valve and the cam shaft.

The cylinder head 22 includes, as shown in Fig. 2 and Fig. 3, an intake port 221 and cooling water inlet/outlet 222 formed in an upper surface thereof, and an exhaust port 223 formed in a lower surface thereof. An intake pipe 31 described later is connected to the intake port 221, and a cooling water pipe 224 is connected to the cooling water inlet/outlet 222.

The intake port 221 is formed in an approximately center portion of the upper surface of the cylinder head 22 in the widthwise direction of the vehicle.

The cooling water inlet/outlet 222 is formed in an upper surface of the cylinder head 22 on one side (right side) in the widthwise direction of the vehicle. Cooling water is supplied to the cooling water inlet/outlet 222 from a radiator (not shown in the drawing) which is arranged on a rear portion of the vehicle on a right side in the widthwise direction by way of the cooling water pipe 224, and the engine 20 is cooled by the supplied cooling water.

An exhaust pipe 225 and a silencer (not shown in the drawing) which is connected to a distal end side of the exhaust pipe 225 are connected to the exhaust port 223.

The cylinder 23 houses the piston. The cylinder 23 is, as shown in Fig. 2 and Fig. 3, provided with a tensioner lifter 231 which is arranged on an upper surface of the cylinder 23 in a projecting manner and applies a predetermined tension to the cam chain. The tensioner lifter 231 is arranged on the upper surface of the cylinder 23 on one side (right side) in the widthwise direction of the vehicle.

The crankcase 24 houses the crankshaft. The crankcase 24 is, as shown in Fig. 2 and Fig. 3, provided with a pair of vehicle body connecting portions 241 to which the above-mentioned connecting members 131 are connected. The engine 20 is swingably connected to the vehicle body frame 10 by way of the connecting members 131 and the support plates 132 at the vehicle body connecting portions 241.

The pair of vehicle body connecting portions 241 is arranged on a front end side of the upper surface of the crankcase 24 in the vicinity of both end portions in the widthwise direction of the vehicle.

In the engine 20 described heretofore, the reciprocating movement of the piston arranged in the inside of the cylinder 23 is converted into the rotational movement of the crankshaft by way of a connecting rod (not shown in the drawing). Then, an output of the engine 20 is transmitted to the rear wheel 6 by way of the power transmission device 7.

Further, the rotational movement of the crankshaft is transmitted to the cam shaft by way of the cam chain so as to operate the intake valve and the exhaust valve.

The cam chain is arranged in a cam chain chamber 25 (see Fig. 3) which is a space formed in an extending manner in the longitudinal direction of the vehicle on one end side (right end side) in the widthwise direction of the vehicle in the inside of the engine 20, and is formed in an upwardly bulging manner on an upper surface of the cylinder head 22 and an upper surface of the cylinder 23 (see Fig. 3).

The power transmission device 7 transmits a drive force of the engine 20 to the rear wheel 6. Further, the power transmission device 7 rotatably supports the rear wheel 6. The power transmission device 7 is arranged on a left end side in the widthwise direction of the vehicle.

Rear cushions 8 are arranged in pair in the lateral direction. The rear cushion 8 on a left side has an upper end side thereof connected to the seat rail 13, and has a lower end side thereof connected to a rear end portion of the power transmission device 7. On the other hand, the rear cushion on a right side (not shown in the drawing) has an upper end side thereof connected to the seat rails 13 and a lower end side thereof connected to the swing arm (not shown in the drawing).

A seat 91 on which occupants (rider and pillion passenger) seat is supported on upper portions of the pair of seat rails 13.

The storage box 92 is arranged below the seat 91. To be more specific, the storage box 92 is arranged in a space defined above the engine 20 and below the seat 91.

The fuel tank 93 is arranged in a space surrounded by the main frame 12 and the down frame 14 in front of the engine 20.

A front fender 95 is fixed to the front fork 3 and covers the front wheel 2 from above. A rear fender 96 is fixed to the seat rails 13 and covers the rear wheel 6 from above.

The air cleaner 5 purifies air supplied to the engine 20. The air cleaner 5 includes a hollow air cleaner case and an air cleaner element which is housed in the inside of the air cleaner case, and filters air (not shown in the drawing). The air cleaner 5 is, as shown in Fig. 1 to Fig. 3, arranged above the power transmission device 7 on a left end side in the widthwise direction of the vehicle, and is connected to the crankcase 24 and the power transmission device 7.

The intake passage 30 connects the air cleaner 5 and the intake port 221 thus forming a passage for intake air between the air cleaner 5 and the engine. As shown in Fig. 2 and Fig. 3, the intake passage 30 extends toward the crankcase 24 side from the intake port 221, and is arranged along the upper surface of the engine 20. To be more specific, as shown in Fig. 3, the intake passage 30 has a bent portion 30a which is bent at a portion positioned above an upper surface of the crankcase 24. The intake passage 30 extends in the rearward direction from the intake port 221 and, thereafter, is bent toward one side (left side) in the widthwise direction of the vehicle at the bent portion 30a, and is connected to the air cleaner 5.

The intake passage 30 is, as shown in Fig. 3, constituted of the intake pipe 31 connected to the intake port 221, the throttle body 40 connected to a rear end of the intake pipe 31, and the connecting tube 32 which connects a rear end of the throttle body 40 and the air cleaner 5.

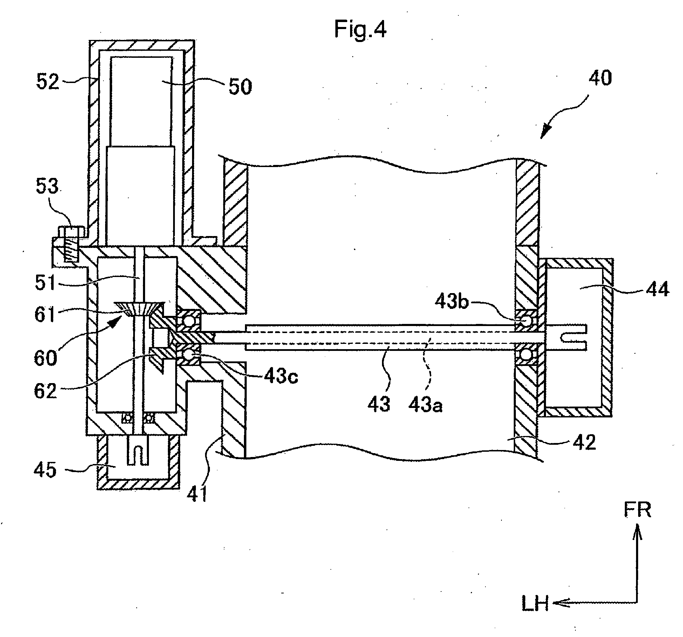

Next, the constitution of the throttle body 40 and the throttle valve drive motor 50 is explained. Fig. 4 is a view which schematically shows the constitution of the throttle body 40 and the throttle valve drive motor 50.

As shown in Fig. 2 and Fig. 3, the throttle body 40 is arranged on the upper surface of the cylinder 23. Further, the throttle valve drive motor 50 is arranged on an outer surface (upper surface) of the engine 20 (the cylinder 23 and the cylinder head 22) in an overlapping manner with the intake pipe 31 as viewed in a side view. To be more specific, the throttle valve drive motor 50 is arranged on the upper surface of the engine 20 on the other (left) side in the widthwise direction of the vehicle as well as in front of the throttle body 40 on the left side in the widthwise direction of the vehicle. As shown in Fig. 1 to Fig. 3, the throttle valve drive motor 50 is arranged in a region surrounded by the vehicle body frame 10.

As shown in Fig. 4, the throttle body 40 includes a body 41, an intake flow passage 42 which is formed in the body 41 in a penetrating manner and constitutes a portion of the intake passage 30, a butterfly-type throttle valve 43 which is arranged in the intake flow passage 42 and opens/closes the intake flow passage 42, an opening sensor 44 which detects opening of the throttle valve 43, a speed reduction mechanism 60 which is interposed between the throttle valve 43 and the throttle valve drive motor 50, and a rotational angle sensor 45 which detects a rotational angle of a rotary shaft 51 of the throttle valve drive motor 50.

The body 41 is configured as a housing which houses the throttle valve 43, the opening sensor 44, the speed reduction mechanism 60 and the rotational angle sensor 45.

The intake flow passage 42 is formed in the body 41 in a penetrating manner in the longitudinal direction of the vehicle.

As shown in Fig. 3 and Fig. 4, the throttle valve 43 is a so-called butterfly valve which has an opening/closing shaft 43a which extends in the direction orthogonal to the extending direction of the intake flow passage 42, and is rotated about the opening/closing shaft 43a as the center of rotation. To be more specific, the throttle valve 43 is configured to be rotatable about the opening/closing shaft 43a as the center of rotation by rotatably supporting a distal end side and a proximal end side of the opening/closing shaft 43a on the body 41 by way of bearings 43b, 43c.

The opening sensor 44 is mounted on a right end side of the throttle body 40 in a projecting manner. The opening sensor 44 is arranged on the distal end side of the opening/closing shaft 43a, and detects the opening of the throttle valve 43 by detecting a rotational angle of the opening/closing shaft 43a. The opening sensor 44 is connected to an electronic control unit described later. A detection signal (detection value) obtained by the opening sensor 44 is outputted to the electronic control unit.

The throttle valve drive motor 50 generates a rotational output for driving the throttle valve 43. The throttle valve drive motor 50 is constituted of a cylindrical DC motor, and is housed in a motor housing 52. The throttle valve drive motor 50 has the rotary shaft 51 thereof arranged along the extending direction of the intake flow passage 42.

The throttle valve drive motor 50 is fixed to the throttle body 40 by fastening the motor housing 52 to the body 41 of the throttle body 40 using bolts 53 in a state where the throttle valve drive motor 50 is housed in the motor housing 52.

The speed reduction mechanism 60 reduces a rotational speed of a rotational output generated by the throttle valve drive motor 50. The speed reduction mechanism 60 includes a first bevel gear 61 and a second bevel gear 62.

The first bevel gear 61 is mounted on the rotary shaft 51 of the throttle valve drive motor 50. The second bevel gear 62 is mounted on a proximal end side of the opening/closing shaft 43a of the throttle valve 43, and is arranged to be meshed with the first bevel gear 61. Further, the rotary shaft 51 of the throttle valve drive motor 50 and the opening/closing shaft 43a of the throttle valve 43 are arranged to be orthogonal to each other.

The rotational angle sensor 45 is arranged on a rear portion of the throttle body 40 along an axis of the rotary shaft 51 of the throttle valve drive motor 50. The rotational angle sensor 45 is arranged on a distal end side of the rotary shaft 51 of the throttle valve drive motor 50, and detects a rotational angle of the rotary shaft 51.

The rotational angle sensor 45 is connected to the electronic control unit described later. A detection signal (detection value) obtained by a drive shaft rotational angle detection sensor 80 is outputted to the electronic control unit.

According to the throttle body 40 and the throttle valve drive motor 50 described above, a rotational output generated by the throttle valve drive motor 50 is sequentially transmitted in order of the first bevel gear 211 and the second bevel gear 212. The rotational output generated by the throttle valve drive motor 50 is reduced corresponding to a speed reduction ratio set by the respective gears during the transmission of the rotational output by way of the respective gears, and rotates the opening/closing shaft 43a of the throttle valve 43. To be more specific, the rotational output generated by the throttle valve drive motor 50 is a high-rotation and low-torque rotational output. By reducing a speed of this rotational output by using the speed reduction mechanism 60, the high-speed low-torque rotational output is converted into a low-rotation and high-torque rotational output.

The electronic control unit (ECU) not shown in the drawing is constituted of a microcomputer. The electronic control unit controls the rotation of the throttle valve drive motor 50 in response to an input from a throttle grip (not shown in the drawing) which constitutes a manipulator which a driver manipulates. Further, by comparing a detection value detected by the rotational angle sensor 45 and a detection value detected by the opening sensor 44 to each other, the electronic control unit detects a malfunction of the throttle valve drive motor 50. Further, the electronic control unit performs various kinds of basic controls (an ignition timing control, a fuel injection control and the like of the engine 20) based on signals from various sensors not shown in the drawing.

The motorcycle 1 according to the first embodiment explained heretofore acquires the following advantages.

The throttle valve drive motor 50 is arranged on the portion of the intake pipe 31 along the upper surface of the engine 20 in an overlapping manner with the intake pipe 31 as viewed from a side of the vehicle. Due to such a constitution, the throttle valve drive motor 50 does not largely project from the outer surface of the engine 20. Accordingly, it is possible to prevent the structure of the engine in the vicinity of the intake passage 30 when the throttle valve drive motor 50 is arranged from becoming large-sized and hence, the structure of the engine 20 in the vicinity of the intake passage 30 can be formed into a compact shape.

Further, the throttle valve drive motor 50 does not project in the upward direction from the intake passage 30 and hence, even when the storage box 92 is arranged above the intake passage 30, it is possible to arrange the throttle valve drive motor 50 while ensuring a capacity of the storage box 92.

Further, the opening/closing shaft 43a of the throttle valve 43 is arranged along the widthwise direction of the vehicle, and the rotary shaft 51 of the throttle valve drive motor 50 is arranged orthogonal to the opening/closing shaft 43a of the throttle valve 43. Due to such a constitution, the axial direction of the throttle valve drive motor 50 can be arranged along the longitudinal direction of the vehicle. Accordingly, the throttle valve drive motor 50 does not largely project in the widthwise direction of the vehicle and hence, the structure of the engine 20 in the vicinity of the intake passage 30 can be formed into a compact shape.

Further, the speed reduction mechanism 60 is constituted including the first bevel gear 61 and the second bevel gear 62 as elements thereof. Due to such a constitution, it is possible to arrange the rotary shaft 51 of the throttle valve drive motor 50 and the opening/closing shaft 43a of the throttle valve 43 orthogonal to each other using the simple constitution.

Further, the throttle valve drive motor 50 is arranged in front of the connecting portion between the seat rails 13 and the crankcase 24. Due to such a constitution, when the throttle valve drive motor 50 is arranged, the throttle valve drive motor 50 does not interfere with the connecting portion between the seat rails 13 and the crankcase 24. Accordingly, the structure in the vicinity of the connecting portion can be formed into a compact shape.

The cam chain chamber 25 is arranged on the right side of the inside of the engine 20 in the widthwise direction of the vehicle, and the throttle valve drive motor 50 is arranged on the left side of the engine 20 in the widthwise direction of the vehicle. Further, the tensioner lifter 231 is arranged on the upper surface of the engine 20 on the right side in the widthwise direction of the vehicle. Due to such a constitution, the throttle valve drive motor 50 can be arranged on a side opposite to a side where the cam chain chamber 25 which projects from the upper surface of the engine 20 and the tensioner lifter 231 which projects from the upper surface of the engine 20 in the shape of the engine 20 are provided and hence, the structure in the vicinity of the engine 20 can be formed into a compact shape.

Further, the cooling water inlet/outlet 222 is arranged on the upper surface of the engine 20 on a right side in the widthwise direction of the vehicle, and the throttle valve drive motor 50 is arranged on the upper surface of the engine 20 on the left side in the widthwise direction of the vehicle. Due to such a constitution, in the engine 20, the throttle valve drive motor 50 can be arranged on the side opposite to the side where the cooling water inlet/outlet 222 to which the cooling water pipe 224 is connected is provided. Accordingly, it is possible to arrange the throttle valve drive motor 50 while preventing the throttle valve drive motor 50 from interfering with the cooling water inlet/outlet 222 and the cooling water pipe 224 and hence, the structure in the vicinity of the engine 20 can be formed into a compact shape.

Further, the throttle valve drive motor 50 is arranged in front of the throttle body 40 and the rotational angle sensor 45 is arranged on the rear portion of the throttle body 40 along the axis of the rotary shaft 51 of the throttle valve drive motor 50. Due to such an arrangement, it is possible to effectively make use of a space formed above the upper surface of the engine 20 on a side opposite to a side where the throttle valve drive motor is arranged with respect to the throttle body 40 and hence, the structure in the vicinity of the engine 20 can be formed into a compact shape.

The throttle valve drive motor 50 is arranged in front of the throttle body 40 on a left side in the widthwise direction of the vehicle, and the opening sensor 44 is arranged in the throttle body 40 on a right side in the widthwise direction of the vehicle. Due to such an arrangement, it is possible to effectively make use of a space formed above the upper surface of the engine 20 on a side opposite to a side where the throttle valve drive motor is arranged with respect to the throttle body 40 and hence, the structure in the vicinity of the engine 20 can be formed into a compact shape.

Further, since the throttle valve drive motor 50 is arranged in the region surrounded by the vehicle body frame 10, it is possible to protect the throttle valve drive motor 50 by the vehicle body frame 10.

Further, the motor housing 52 is constituted as a separate body from the throttle body 40, and the motor housing 52 which houses the throttle valve drive motor 50 is fixed to the body 41 of the throttle body 40. Due to such a constitution, the maintenance of the throttle valve drive motor 50 can be performed separately from the maintenance of the throttle body 40 and hence, the maintenance property of the throttle valve drive motor 50 can be enhanced.

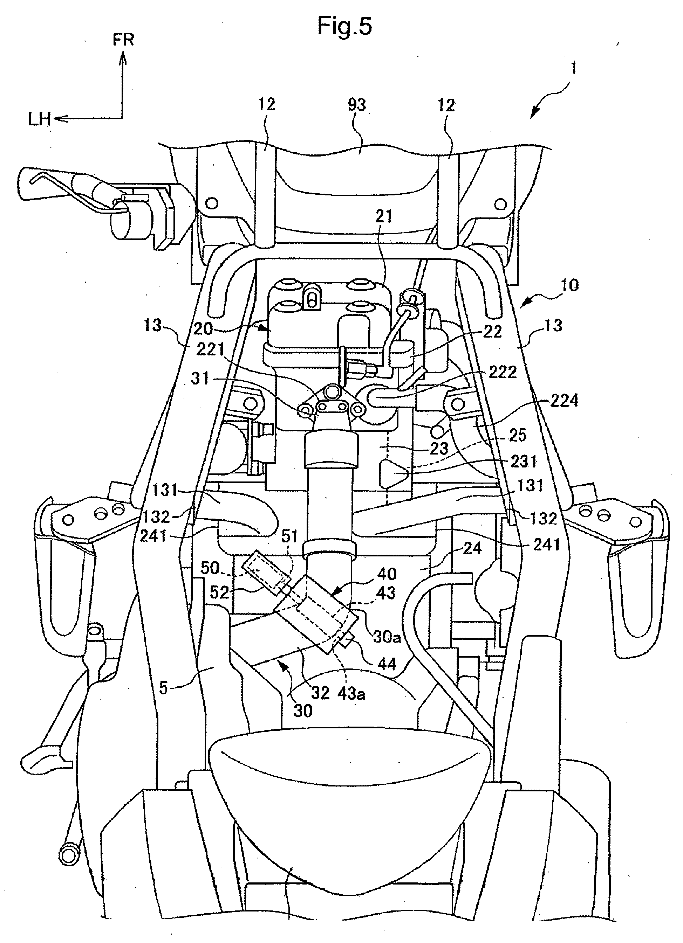

Next, a second embodiment of the saddle-ride-type vehicle of the present invention is explained in conjunction with Fig. 5. Fig. 5 is a plan view showing the constitution of a portion of a motorcycle 1 around an engine according to the second embodiment.

In the explanation of the second embodiment and after that, same symbols are used with respect to parts identical with the parts of the first embodiment and their explanation is omitted or simplified.

A motorcycle 1 of the second embodiment differs from the motorcycle of the first embodiment with respect to the arrangement of a throttle body 40 and a throttle valve drive motor.

To be more specific, as shown in Fig. 5, in the second embodiment, the throttle body 40 is arranged in a bent portion 30a of an intake passage 30. That is, in the second embodiment, a length of an intake pipe 31 is elongated and a length of a connecting tube 32 is shortened compared to the first embodiment. Further, a throttle valve drive motor 50 is arranged on a recessed side of the bent portion 30a which is a region surrounded by the bent portion 30a as viewed in a plan view.

Further, in the second embodiment, the throttle valve drive motor 50 is arranged such that a rotary shaft 51 of the throttle valve drive motor 50 becomes parallel to an opening/closing shaft 43a of a throttle valve 43. Further, in the second embodiment, a speed reduction mechanism (not shown in the drawing) is constituted of a plurality of spur gears (not shown in the drawing).

The motorcycle 1 of the second embodiment can acquire the following advantageous effects in addition to advantageous effects substantially equal to the advantageous effects of the first embodiment.

The intake passage 30 is constituted such that the intake passage 30 includes the bent portion 30a which is formed on the upper surface of a crankcase 24, the throttle body 40 is arranged on the bent portion 30a, and the throttle valve drive motor 50 is arranged in the region surrounded by the bent portion 30a as viewed in a plan view. Due to such a constitution, the throttle valve drive motor 50 can be arranged in the recessed side of the bent portion 30a which is the region surrounded by the intake passage 30 and hence, it is possible to ensure the degree of freedom in the arrangement of other accessories arranged on the upper surface of the engine 20. Accordingly, the throttle valve drive motor 50 and other accessories can be efficiently arranged on the upper surface of the engine 20 and hence, the structure of the upper surface of the engine 20 can be formed into a compact shape.

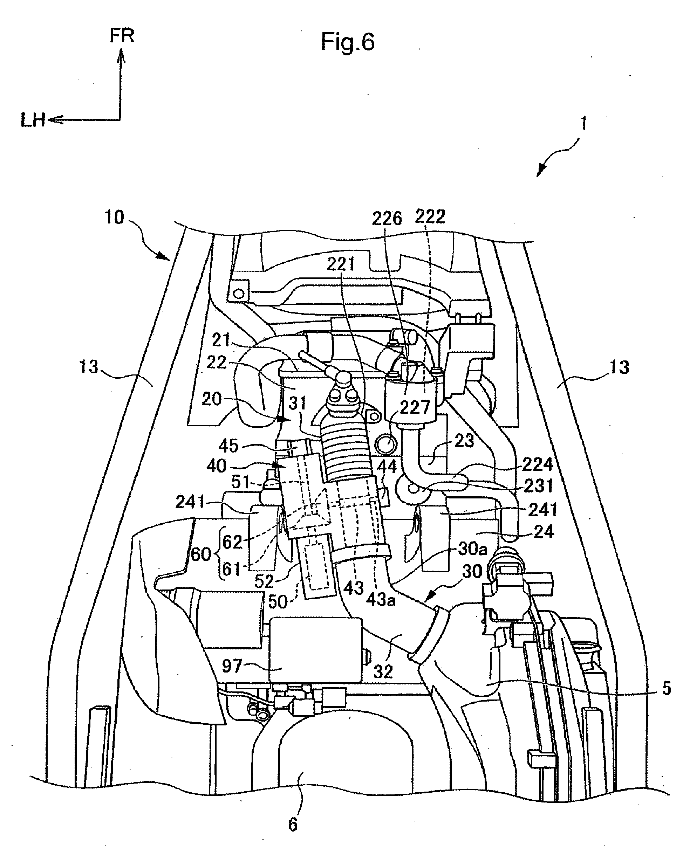

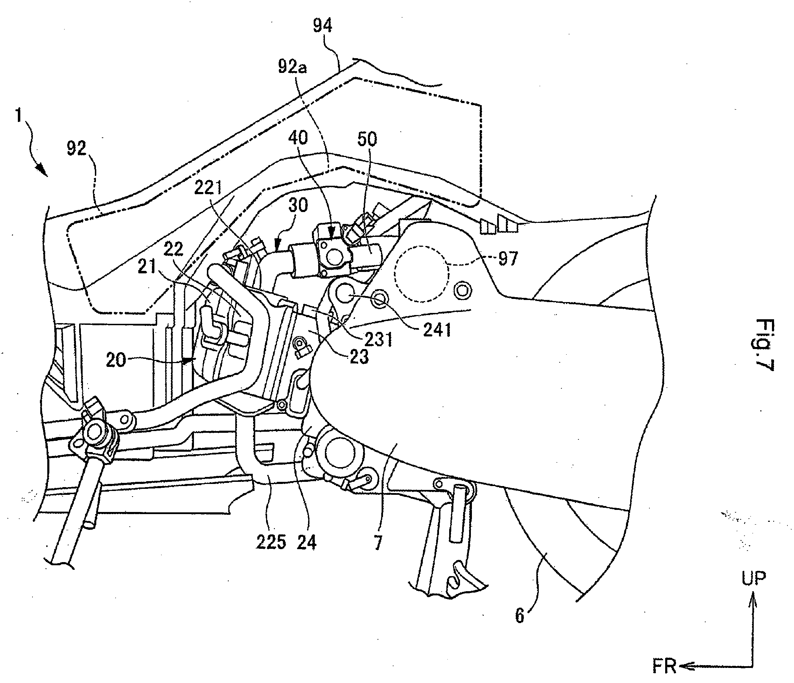

Next, a third embodiment of the saddle-ride-type vehicle of the present invention is explained in conjunction with Fig. 6 and Fig. 7. Fig. 6 is a plan view showing the constitution of a portion of a motorcycle 1 around an engine of a motorcycle 1 according to the third embodiment. Fig. 7 is a left side view of the motorcycle 1.

The motorcycle 1 of the third embodiment differs from the motorcycle of the first embodiment mainly with respect to the arrangement of a throttle valve drive motor 50, the arrangement of a starter motor 97, the arrangement of an air cleaner 5 and the constitution of a storage box 92.

To be more specific, in the third embodiment, as shown in Fig. 6, the starter motor 97 is arranged on an upper surface of a crankcase 24. The starter motor 97 imparts a rotational force to a crankshaft at the time of starting an engine 20.

Further, as shown in Fig. 6 and Fig. 7, a throttle valve drive motor 50 is arranged to be sandwiched between the starter motor 97 and the throttle body 40 in the longitudinal direction of a vehicle, and is arranged in an overlapping manner with an intake passage 30 as viewed in a side view of a vehicle. Further, a rotational angle sensor 45 is arranged on a front portion of the throttle body 40 along an axis of a rotary shaft 51 of the throttle valve drive motor 50.

Further, in the third embodiment, in the vicinity of a cooling water inlet/outlet 222 formed in an upper surface of a cylinder head 22, a thermostat-case 226 which houses a thermostat (not shown in the drawing) which controls the flow of cooling water and a water temperature sensor 227 which measures a temperature of cooling water which circulates through the inside of the engine 20 are arranged.

Further, in the third embodiment, the air cleaner 5 is arranged on a right end side in the widthwise direction of the vehicle. The intake passage 30 is constituted such that a bent portion 30a is formed by bending a portion of the intake passage 30 which is positioned on an upper surface of the crankcase 24. The intake passage 30 extends in the rearward direction from an intake port 221 and, thereafter, is bent toward a right side in the widthwise direction of the vehicle at the bent portion 30a and is connected to the air cleaner 5.

Further, in the third embodiment, as shown in Fig. 7, the storage box 92 includes a bulging portion 92a which bulges such that a bottom surface of the storage box 92 forms an upward convex shape at a center portion thereof in the longitudinal direction of the vehicle. The engine 20, the throttle body 40 and the throttle valve drive motor 50 are arranged below the bulging portion 92a. That is, the throttle body 40 and the throttle valve drive motor 50 are arranged at a position which faces the bulging portion 92a.

The motorcycle 1 of the third embodiment can acquire the following advantageous effects in addition to advantageous effects substantially equal to the advantageous effects of the first embodiment.

The starter motor 97 requires a relatively large torque and hence, the starter motor 97 is formed into a relatively large shape compared to the throttle valve drive motor 50. In view of the above, the starter motor 97 is arranged on an upper surface of the crankcase 24, the throttle body 40 is arranged on the upper surface of the cylinder 23 in front of the crankcase 24, and the throttle valve drive motor 50 is arranged between the starter motor 97 and the throttle body. Due to such a constitution, the throttle valve drive motor 50 can be arranged in a space defined between the starter motor 97 which is mounted on the upper surface of the engine 20 in a projecting manner and the throttle body 40. Accordingly, the structure of the upper surface of the engine 20 when the throttle valve drive motor 50 is arranged can be formed into a compact shape.

Further, the throttle valve drive motor 50 is arranged at the position where the throttle valve drive motor 50 faces the bulging portion 92a of the storage box 92 in an opposed manner. Due to such a constitution, it is possible to arrange the throttle valve drive motor 50 without lowering the capacity of the storage box 92.

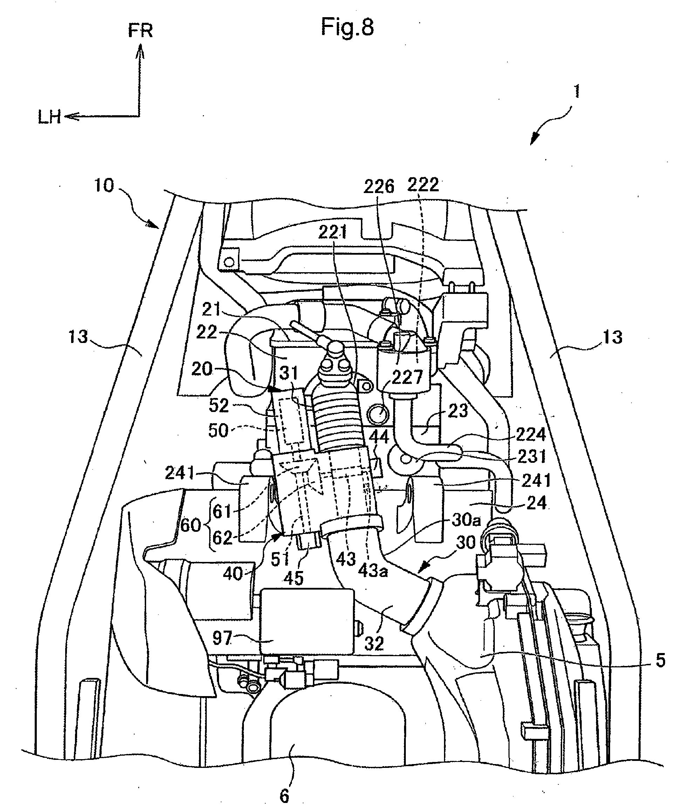

Next, a fourth embodiment of the saddle-ride-type vehicle of the present invention is explained in conjunction with Fig. 8. Fig. 8 is a plan view showing the constitution of a portion of a motorcycle 1 around an engine according to the fourth embodiment.

The motorcycle 1 of the fourth embodiment differs from the third embodiment mainly with respect to the arrangement of a throttle valve drive motor 50 and a rotational angle sensor 45. To be more specific, in the fourth embodiment, the throttle valve drive motor 50 is arranged in front of a throttle body 40, and the rotational angle sensor 45 is arranged on a rear portion of the throttle body 40 along an axis of a rotary shaft 51 of the throttle valve drive motor 50. That is, the fourth embodiment has the substantially same constitution as the third embodiment except for that the position of the throttle valve drive motor 50 and the position of the rotational angle sensor 45 are exchanged.

The motorcycle 1 of the fourth embodiment acquires the substantially same advantageous effects as the first embodiment.

Although the preferred embodiments of the present invention have been explained heretofore, the present invention is not limited to the above-mentioned embodiments and the present invention can be carried out in various modes.

For example, although the present invention is applied to the scooter-type motorcycle which constitutes the saddle-ride-type vehicle in the first embodiment to the fourth embodiment, the present invention is not limited to the scooter-type motorcycle. That is, the present invention is applicable to a three-wheeled or four-wheeled saddle-ride-type vehicle. In other words, the saddle-ride-type vehicle includes vehicles in general where a rider rides on the vehicle in a state that the rider straddles a vehicle body.

### Main reference numbers:

- 1: motorcycle (saddle-ride-type vehicle)
- 5: air cleaner
- 10: vehicle body frame
- 20: engine (internal combustion engine)
- 22: cylinder head
- 23: cylinder
- 24: crankcase
- 25: cam chain chamber
- 30: intake passage
- 30a: bent portion
- 43a: opening/closing shaft
- 43: throttle valve
- 40: throttle body
- 50: throttle valve drive motor
- 97: starter motor
- 221: intake port
- 222: cooling water inlet/outlet

## Claims

1. A saddle-ride-type vehicle (1) comprising:
a vehicle body frame (10);
an internal combustion engine (20) which includes a cylinder head (22) provided with an intake port (221), a cylinder (23) connected to the cylinder head (22) and a crankcase (24) which includes a crankshaft and is connected to the cylinder (23), and is connected to the vehicle body frame (10);
an air cleaner (5) which purifies intake air;
an intake passage (30) which connects the air cleaner (5) and the intake port (221) so as to form a passage between the air cleaner (5) and the internal combustion engine (20);
a throttle body (40) which constitutes a portion of the intake passage (30) and is provided with a throttle valve (43) which has a predetermined opening/closing shaft (43a) and is operable to change a quantity of intake air which circulates through the intake passage (30); and
a throttle valve drive motor (50) which drives the throttle valve (43), wherein
the intake passage (30) extends toward a crankcase side from the intake port (221), and at least a portion of the intake passage (30) is arranged along an outer surface of the internal combustion engine (20), and
the throttle valve drive motor (50) is arranged on a portion of the intake passage (30) along the outer surface of the internal combustion engine (20) in an overlapping manner with the intake passage (30) as viewed from a side of the vehicle (1).

2. The saddle-ride-type vehicle according to claim 1, wherein the opening/closing shaft (43a) of the throttle valve (43) is arranged along the widthwise direction of the vehicle (1), and
a rotary shaft (51) of the throttle valve drive motor (50) is arranged orthogonal to the opening/closing shaft (43a).

3. The saddle-ride-type vehicle according to claim 2, wherein the internal combustion engine (20) is swingably connected to the vehicle body frame (10), and
the throttle valve drive motor (50) is arranged in front of a connecting portion between the vehicle body frame (10) and the internal combustion engine (20).

4. The saddle-ride-type vehicle according to any one of claims 1 to 3, wherein the internal combustion engine (20) further includes a cam chain chamber (25) arranged on one side of the inside of the internal combustion engine (20) in the widthwise direction of the vehicle (1), and
the throttle valve drive motor (50) is arranged on the other side of the internal combustion engine (20) in the widthwise direction of the vehicle (1).

5. The saddle-ride-type vehicle according to any one of claims 1 to 3, wherein the internal combustion engine (20) further includes a cooling water inlet/outlet (222) which is formed on one side of the internal combustion engine (20) in the widthwise direction of the vehicle (1) and allow the flow-in/flow-out of cooling water for cooling the internal combustion engine (20), and
the throttle valve drive motor (50) is arranged on the other side of the internal combustion engine (20) in the widthwise direction of the vehicle (1).

6. The saddle-ride-type vehicle according to claim 1, wherein the cylinder (23) is arranged such that an axis of the cylinder (23) becomes approximately horizontal,
the internal combustion engine (20) further includes a starter motor (97) which is arranged on an upper surface of the crankcase (24),
the throttle body (40) is arranged on an upper surface of the internal combustion engine (20) in front of the crankcase (24), and
the throttle valve drive motor (50) is arranged between the starter motor (97) and the throttle body (40) in an overlapping manner with the intake passage (30) as viewed in a side view of the vehicle (1).

7. The saddle-ride-type vehicle according to claim 1, wherein the air cleaner (5) is arranged in an offset manner toward one side in the widthwise direction of the vehicle (1) with respect to the intake port (221) as viewed in a plan view,
the intake passage (30) has a bent portion (30a) which is formed on an upper surface of the internal combustion engine (20),
the throttle body (40) is arranged on the bent portion (30a), and
the throttle valve drive motor (50) is arranged in a region which is surrounded by the bent portion (30a) as viewed in a plan view.

## Patentansprüche

1. Fahrzeug (1) vom Sattelfahrtyp, umfassend:
einen Fahrzeugkörperrahmen (10);
einen Verbrennungsmotor (20), welcher einen mit einer Einlassöffnung (221) versehenen Zylinderkopf (22), einen mit dem Zylinderkopf (22) verbundenen Zylinder (23) und ein eine Kurbelwelle umfassendes und mit dem Zylinder (23) verbundenes Kurbelgehäuse (24) umfasst, und welcher mit dem Fahrzeugkörperrahmen (10) verbunden ist;
einen Luftfilter (5), welcher Einlassluft reinigt;
einen Einlassdurchgang (30), welcher den Luftfilter (5) und die Einlassöffnung (221) verbindet, um einen Durchgang zwischen dem Luftfilter (5) und dem Verbrennungsmotor (20) auszubilden;
einen Drosselkörper (40), welcher einen Abschnitt von dem Einlassdurchgang (30) bildet und mit einem Drosselventil (43) versehen ist, welches eine vorbestimmte Öffnungs-/Schließ-Welle (43a) hat und betätigbar ist, um eine Einlassluftmenge zu verändern, welche durch den Einlassdurchgang (30) zirkuliert; und
einen Drosselventil-Antriebsmotor (50), welcher das Drosselventil (43) antreibt, wobei
sich der Einlassdurchgang (30) von der Einlassöffnung (221) zu einer Kurbelgehäuseseite hin erstreckt, und wenigstens ein Abschnitt von dem Einlassdurchgang (30) entlang einer äußeren Fläche von dem Verbrennungsmotor (20) angeordnet ist, und
der Drosselventil-Antriebsmotor (50) an einem Abschnitt von dem Einlassdurchgang (30) entlang der äußeren Fläche von dem Verbrennungsmotor (20) in einer mit dem Einlassdurchgang (30) überlappenden Weise angeordnet ist, von einer Seite des Fahrzeugs (1) aus gesehen.

2. Fahrzeug vom Sattelfahrtyp nach Anspruch 1, wobei die Öffnungs-/Schließ-Welle (43a) von dem Drosselventil (43) entlang der Breitenrichtung von dem Fahrzeug (1) angeordnet ist, und
eine Drehwelle (51) von dem Drosselventil-Antriebsmotor (50) orthogonal zu der Öffnungs-/Schließ-Welle (43a) angeordnet ist.

3. Fahrzeug vom Sattelfahrtyp nach Anspruch 2, wobei der Verbrennungsmotor (20) schwenkbar mit dem Fahrzeugkörperrahmen (10) verbunden ist, und
der Drosselventil-Antriebsmotor (50) vor einem Verbindungsabschnitt zwischen dem Fahrzeugkörperrahmen (10) und dem Verbrennungsmotor (20) angeordnet ist.

4. Fahrzeug vom Sattelfahrtyp nach einem der Ansprüche 1 bis 3, wobei der Verbrennungsmotor (20) ferner eine Nockenkettenkammer (25) umfasst, welche in der Breitenrichtung des Fahrzeugs (1) auf einer Seite von der Innenseite von dem Verbrennungsmotor (20) angeordnet ist, und der Drosselventil-Antriebsmotor (50) in der Breitenrichtung des Fahrzeugs (1) auf der anderen Seite von dem Verbrennungsmotor (20) angeordnet ist.

5. Fahrzeug vom Sattelfahrtyp nach einem der Ansprüche 1 bis 3, wobei der Verbrennungsmotor (20) ferner einen Kühlwasser-Einlass/Auslass (222) umfasst, welcher in der Breitenrichtung des Fahrzeugs (1) auf einer Seite von dem Verbrennungsmotor (20) ausgebildet ist und das Einströmen/Ausströmen von Kühlwasser zum Kühlen des Verbrennungsmotors (20) erlaubt, und
der Drosselventil-Antriebsmotor (50) in der Breitenrichtung des Fahrzeugs (1) auf der anderen Seite von dem Verbrennungsmotor (20) angeordnet ist.

6. Fahrzeug vom Sattelfahrtyp nach Anspruch 1, wobei der Zylinder (23) derart angeordnet ist, dass eine Achse von dem Zylinder (23) annähernd horizontal wird,
der Verbrennungsmotor (20) ferner einen Anlassermotor (97) umfasst, welcher auf einer oberen Fläche von dem Kurbelgehäuse (24) angeordnet ist,
der Drosselkörper (40) auf einer oberen Fläche von dem Verbrennungsmotor (20) vor dem Kurbelgehäuse (24) angeordnet ist, und
der Drosselventil-Antriebsmotor (50), in einer Seitenansicht des Fahrzeugs (1) gesehen, zwischen dem Anlassermotor (97) und dem Drosselkörper (40) in einer mit dem Einlassdurchgang (30) überlappenden Weise angeordnet ist.

7. Fahrzeug vom Sattelfahrtyp nach Anspruch 1, wobei der Luftfilter (5), in einer Draufsicht gesehen, in einer zu einer Seite in der Breitenrichtung des Fahrzeugs (1) bezüglich der Einlassöffnung (221) versetzten Weise angeordnet ist,
der Einlassdurchgang (30) einen gebogenen Abschnitt (30a) hat, welcher auf einer oberen Fläche von dem Verbrennungsmotor (20) ausgebildet ist,
der Drosselkörper (40) auf dem gebogenen Abschnitt (30a) angeordnet ist, und
der Drosselventil-Antriebsmotor (50) in einem Bereich angeordnet ist, welcher, in einer Draufsicht gesehen, von dem gebogenen Abschnitt (30a) umgeben ist.

## Revendications

1. Véhicule à selle (1) comprenant :
un cadre de véhicule (10) ;
un moteur à combustion interne (20) qui comprend une culasse (22) pourvue d'un orifice d'admission (221), un cylindre (23) connecté à la culasse (22) et un carter (24) qui comprend un vilebrequin et est connecté au cylindre (23), et est connecté au cadre de véhicule (10) ;
un filtre à air (5) qui purifie l'air d'admission ;
un conduit d'admission (30) qui relie le filtre à air (5) et l'orifice d'admission (221) afin de former un conduit entre le filtre à air (5) et le moteur à combustion interne (20) ;
un corps de papillon (40) qui constitue une partie du conduit d'admission (30) et qui est pourvu d'un papillon des gaz (43) qui a un axe d'ouverture/fermeture prédéterminé (43a) et qui peut être actionné pour modifier une quantité d'air d'admission qui circule dans le conduit d'admission (30) ; et
un moteur d'entraînement de papillon des gaz (50) qui entraîne le papillon des gaz (43), dans lequel
le conduit d'admission (30) s'étend vers un côté carter depuis l'orifice d'admission (221), et au moins une partie du conduit d'admission (30) est agencée le long d'une surface extérieure du moteur à combustion interne (20), et
le moteur d'entraînement de papillon des gaz (50) est placé sur une partie du conduit d'admission (30) le long de la surface extérieure du moteur à combustion interne (20) de façon superposée avec le conduit d'admission (30) vu depuis un côté du véhicule (1).

2. Véhicule à selle selon la revendication 1, dans lequel l'axe d'ouverture/fermeture (43a) du papillon des gaz (43) est placé le long de la direction de la largeur du véhicule (1), et
un axe rotatif (51) du moteur d'entraînement de papillon des gaz (50) est disposé orthogonalement à l'axe d'ouverture/fermeture (43a).

3. Véhicule à selle selon la revendication 2, dans lequel le moteur à combustion interne (20) est connecté de façon pivotante au cadre de véhicule (10), et
le moteur d'entraînement de papillon des gaz (50) est placé devant une partie de connexion entre le cadre de véhicule (10) et le moteur à combustion interne (20).

4. Véhicule à selle selon l'une quelconque des revendications 1 à 3, dans lequel le moteur à combustion interne (20) comprend en outre une chambre à chaîne de came (25) placée sur un côté de l'intérieur du moteur à combustion interne (20) dans la direction de la largeur du véhicule (1), et
le moteur d'entraînement de papillon des gaz (50) est placé de l'autre côté du moteur à combustion interne (20) dans la direction de la largeur du véhicule (1).

5. Véhicule à selle selon l'une quelconque des revendications 1 à 3, dans lequel le moteur à combustion interne (20) comprend en outre une entrée/sortie d'eau de refroidissement (222) qui est formée sur un côté du moteur à combustion interne (20) dans la direction de la largeur du véhicule (1) et qui permet la circulation entrante/sortante d'eau de refroidissement pour refroidir le moteur à combustion interne (20), et
le moteur d'entraînement de papillon des gaz (50) est placé de l'autre côté du moteur à combustion interne (20) dans la direction de la largeur du véhicule (1).

6. Véhicule à selle selon la revendication 1, dans lequel le cylindre (23) est disposé de telle manière qu'un axe du cylindre (23) devient à peu près horizontal,
le moteur à combustion interne (20) comprend en outre un démarreur (97) qui est placé sur une surface supérieure du carter (24),
le corps de papillon (40) est placé sur une surface supérieure du moteur à combustion interne (20) devant le carter (24), et
le moteur d'entraînement de papillon des gaz (50) est placé entre le démarreur (97) et le corps de papillon (40) de manière superposée avec le conduit d'admission (30) vu dans une vue latérale du véhicule (1).

7. Véhicule à selle selon la revendication 1, dans lequel le filtre à air (5) est disposé de façon décalée vers un côté dans la direction de la largeur du véhicule (1) par rapport à l'orifice d'admission (221) vu en vue en plan,
le conduit d'admission (30) a une partie courbée (30a) qui est formée sur une surface supérieure du moteur à combustion interne (20),
le corps de papillon (40) est placé sur la partie courbée (30a), et
le moteur d'entraînement de papillon des gaz (50) est placé dans une région qui est entourée par la partie courbée (30a) vue en vue en plan.
